Europäisches Patentamt

European Patent Office

Office européen des brevets

(11) Veröffentlichungsnummer: **0 379 714**
**A2**

## (12) EUROPÄISCHE PATENTANMELDUNG

(21) Anmeldenummer: **89123627.5**

(51) Int. Cl.5: **G02F 1/1341**

(22) Anmeldetag: **21.12.89**

(30) Priorität: **26.01.89 DE 3902255**

(43) Veröffentlichungstag der Anmeldung:
**01.08.90 Patentblatt 90/31**

(84) Benannte Vertragsstaaten:
**DE FR GB IT NL**

(71) Anmelder: **Nokia Unterhaltungselektronik (Deutschland) GmbH**
**Östliche Karl-Friedrich-Strasse 132**
**D-7530 Pforzheim(DE)**

(72) Erfinder: **Brosig, Stefan, Dr.**
**Teckstrasse 51 B**
**D-7000 Stuttgart(DE)**
Erfinder: **Thaler, Helmut**
**Limburgstrasse 97**
**D-7319 Dettingen(DE)**

(54) Verfahren und Vorrichtung zum Herstellen einer Flüssigkristallzelle.

(57) Bei einem Verfahren zum Herstellen einer Flüssigkristallzelle wird eine der beiden Platten mit einem Kleberrandstreifen versehen, auf eine der beiden Platten wird diejenige Flüssigkristallmenge aufgetragen, die zum Bilden der Flüssigkristallschicht im wesentlichen erforderlich ist, und dann werden die beiden Platten im Vakuum unter Justierung zusammengeführt und durch Aushärten des Klebers fest miteinander verbunden.

Dadurch, daß die Platten im Vakuum mit bereits der richtigen Menge an Flüssigkristall auf einer der beiden Platten zusammengeführt werden, ist es nicht mehr erforderlich, den Innenraum zwischen den Platten in einem zeitaufwendigen Verfahren zu evakuieren und in einem ebenso zeitaufwendigen Verfahren Flüssigkristall durch ein kleines Füllloch einzufüllen.

FIG.1

## Verfahren und Vorrichtung zum Herstellen einer Flüssigkristallzelle

### TECHNISCHES GEBIET

Die Erfindung betrifft ein Verfahren und eine Vorrichtung zum Zusammenfügen der beiden Platten einer Flüssigkristallzelle, zum Verkleben der beiden miteinander und zum Einbringen einer Flüssigkristallschicht zwischen die beiden Platten.

### STAND DER TECHNIK

Beim Herstellen einer Flüssigkristallzelle werden zunächst die Frontplatte und die Rückplatte mit Funktionsschichten versehen, also jeweils mit einer strukturierten Elektrodenschicht und einer Orientierungsschicht. Gelegentlich wird auch noch eine Isolierschicht aufgebracht. Für den weiteren Verfahrensgang sind zwei unterschiedliche Teilverfahren bekannt.

Gemäß dem einen Teilverfahren wird eine der beiden Platten mit einem Kleberrandstreifen versehen, dann waagerecht so gehalten, daß der Kleberrandstreifen nach oben zeigt. Dann wird Flüssigkristall in überschüssiger Menge aufgebracht, so daß er über die Ränder der Platte überläuft, sobald die andere Platte aufgedrückt wird. Der Kleber wird dann ausgehärtet, was entweder durch UV-Bestrahlung oder durch Tempern bei einer Temperatur erfolgt, bei der sich der Flüssigkristall noch nicht zersetzt.

Gemäß dem anderen Teilverfahren wird ebenfalls eine der beiden Platten mit einem Kleberrandstreifen versehen. Auf eine der beiden Platten werden außerdem in waagerechter Lage der Platte Abstandshalter, sogenannte Spacer, aufgebracht. Die andere Platte wird von oben auf diese mit Spacern versehene Platte aufgedrückt und dann erfolgt das Aushärten des Klebers in einem Temperprozeß. Es ist zu beachten, daß der Kleberrandstreifen nicht ganz geschlossen ist, so daß der Innenraum zwischen den Platten und dem Kleberrandstreifen über ein kleines Loch mit dem Außenraum in Verbindung steht. Die so hergestellte Anordnung wird in einem Vakuumgefäß evakuiert, an die Öffnung im Kleberrandstreifen wird ein Gefäß mit Flüssigkristall angesetzt und dann wird belüftet. Dadurch wird Flüssigkristall in den evakuierten Innenraum gedrückt. Abschließend wird das Fülloch verklebt.

Das erste Teilverfahren hat den Nachteil, daß der Kleberrandstreifen von Flüssigkristall überflutet wird, was seinen Klebeeigenschaften sehr abträglich ist. Darunter leidet die Stabilität der Zelle. Dieses Verfahren wird daher nur zum Herstellen kleiner Zellen verwendet, dort allerdings in großem Umfang.

Für größere Zellen wird bisher ausschließlich das zweite Teilverfahren verwendet. Bei diesem sind sehr stabile Klebenähte erzielbar, jedoch nimmt das Evakuieren des Innenraumes und sein anschließendes Füllen mit Flüssigkristall eine lange Zeit, bis zu einigen Stunden, in Anspruch.

Der Erfindung liegt die Aufgabe zugrunde, ein Verfahren zum Herstellen einer Flüssigkristallzelle anzugeben, das schnell ausführbar ist, aber dennoch eine stabile Zelle liefert. Der Erfindung liegt weiterhin die Aufgabe zugrunde, eine Vorrichtung zum Ausführen eines solchen Verfahrens anzugeben.

### DARSTELLUNG DER ERFINDUNG

Die Erfindung ist für das Verfahren durch die Merkmale von Anspruch 1 und für die Vorrichtung durch die Merkmale von Anspruch 7 gegeben. Die Unteransprüche 2 - 6 und 8 - 10 geben vorteilhafte Weiterbildungen und Ausgestaltungen des Verfahrens bzw. der Vorrichtung an. Die in den Ansprüchen genannten Merkmale können beliebig miteinander kombiniert werden, insoweit sie sich nicht offensichtlich gegenseitig ausschließen.

Das erfindungsgemäße Verfahren zeichnet sich dadurch aus, daß die beiden miteinander zu verbindenden Platten im Vakuum unter Justierung zusammengeführt und über einen Kleberrandstreifen miteinander verbunden werden, der zuvor auf einer der beiden Platten aufgebracht wurde. Der Kleber wird dann ausgehärtet. Im Kleberrandstreifen kann ein Fülloch ausgespart sein. Es erfolgt dann ein Füllen in herkömmlicher Weise, indem belüftet wird, nachdem ein Gefäß mit Flüssigkristall an das Fülloch angesetzt wurde. Bei diesem Verfahrensablauf fällt die Evakuierzeit weg. Der Füllvorgang beansprucht jedoch dieselbe Zeit wie beim herkömmlichen Verfahren.

Erheblich vorteilhafter wird das Verfahren, wenn bereits Flüssigkristall vor dem Zusammenführen der beiden Platten auf die untere Platte aufgebracht wird. Dies jedoch nur in einer Menge, die im wesentlichen derjenigen entspricht, die zum Bilden der gewünschten Flüssigkristallschicht erforderlich ist. Ein umlaufender Kleberrandstreifen ohne Füllung wird verwendet. Bei diesem Verfahrensablauf reduzieren sich die Vorgänge des Evakuierens des Innenraumes und des Füllen mit Flüssigkristall von z. B. zwei Stunden auf nur zwei Minuten.

Damit bei der eben genannten Verfahrensvariante der aufgebrachte Flüssigkristall mit Sicherheit den Kleberrandstreifen nicht benetzen kann, wird vorteilhafterweise so verfahren, daß die untere Platte zumindest in ihrem Randbereich so weit gekühlt wird, daß dort der Flüssigkristall hochviskos wird oder gar erstarrt.

Die erfindungsgemäße Vorrichtung zeichnet sich dadurch aus, daß sie eine Vakuumeinrichtung mit Zusammenführeinrichtung für die obere und die untere Platte aufweist. Um die im Vakuum arbeitende Zusammenführeinrichtung möglichst einfach auszubilden, ist es von Vorteil, wenn sie eine mechanisch wirkende Justiereinrichtung aufweist. Außerdem trägt es zur Vereinfachung der im Vakuum auszuführenden Verfahrensschritte bei, wenn eine UV-Belichtungseinrichtung vorhanden ist, zum Belichten eines UV-härtbaren Klebers. Zum bereits weiter oben erwähnten Kühlen zumindest des Randbereichs der unteren Platte weist die Vorrichtung vorteilhafterweise eine Kühleinrichtung auf.

## KURZE BESCHREIBUNG DER FIGUREN

Fig. 1 schematische perspektivische Ansicht in den Raum zwischen einer oberen und einer unteren Platte, die durch Einrichtungen gehaltert sind und die zusammengeführt werden sollen;

Fig. 2 schematischer Querschnitt durch den unteren Bereich eines Vakuumgefäßes, in dem die untere Platte einer Flüssigkristallzelle gelagert ist;

Fig. 3 schematischer Querschnitt durch ein Vakuumgefäß, das die beiden Platten einer Flüssigkristallzelle in zusammengeführtem Zustand enthält;

Fig. 4A und 4B Querschnitte durch eine Flüssigkristallzelle vor dem vollständigen Verteilen eines Flüssigkristalls im Innenraum der Zelle bzw. nach dem vollständigen Verteilen; und

Fig. 5 Ablaufplan des bevorzugten Herstellverfahrens.

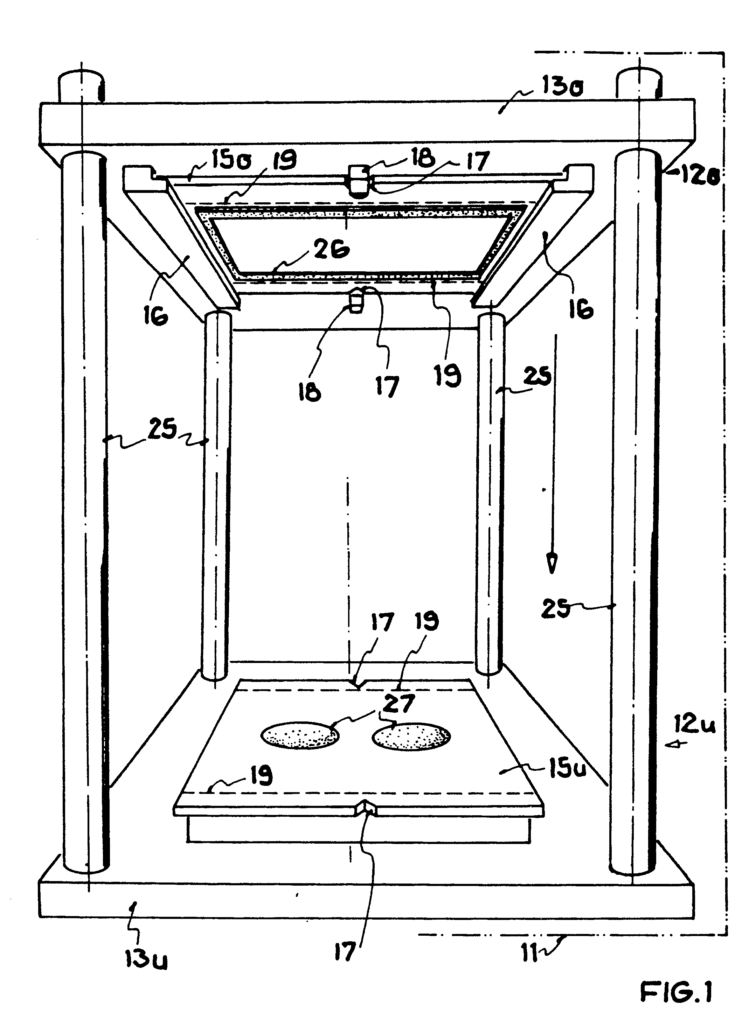

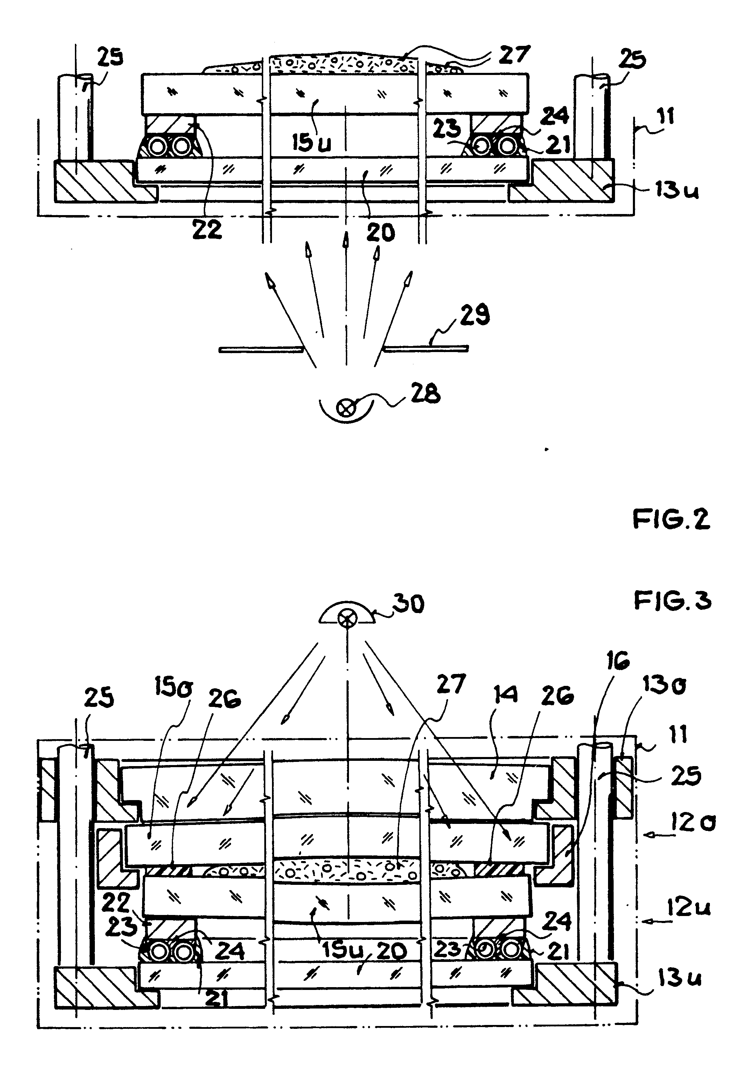

Anhand der Fig. 1 - 3 wird zunächst eine Vorrichtung zum Herstellen einer Flüssigkristallzelle beschrieben. Es handelt sich um ein Vakuumgefäß 11 mit einer oberen Haltevorrichtung 12.o und einer unteren Haltevorrichtung 12.u. Das Vakuumgefäß 11 ist nur strichpunktiert dargestellt, damit die für die Vorrichtung wesentlichen Bauteile so deutlich wie möglich hervortreten. Das Vakuumgefäß kann so ausgebildet sein, daß es zunächst geöffnet ist, dann die Haltevorrichtungen mit jeweils gehaltenen Flüssigkristallplatte eingesetzt werden, dann das Gefäß verschlossen wird, Arbeitsvorgänge ausgeführt werden und schließlich wieder das ganze Gefäß belüftet wird, oder es kann so ausgebildet sein, daß der eigentliche Arbeitsraum dauernd evakuiert ist und die obere und die untere Haltevorrichtung mit jeweils einer Flüssigkristallplatte über Schleusen eingeführt werden. Für die wesentlichen Vorrichtungsteile und die wesentlichen Verfahrensschritte ist es jedoch unerheblich, wie die Vorrichtungsteile in den eigentlichen Arbeitsraum gelangen.

Die obere Haltevorrichtung 12.o weist einen rechteckförmigen Tragring 13 auf, in den eine UV-durchlässige Quarzglasplatte eingelegt ist. An der unteren durchgehenden Fläche von Tragring 13 und Quarzglasplatte 14 liegt eine obere Flüssigkristallplatte 15.o an. Diese wird durch zwei Magnethalter 16, die ihren linken bzw. rechten Rand untergreifen, am Herunterfallen gehindert. An ihren Längsrändern weist die obere Flüssigkristallplatte 15.o je eine Einkerbung 17 auf, in die jeweils ein Zentrierstift 18 greift. Jede Einkerbung 17 befindet sich in einem Randbereich, der nach Herstellung der Flüssigkristallzelle abgebrochen wird. Die Bruchlinien 19 sind gestrichelt eingezeichnet.

Die untere Haltevorrichtung 12.u verfügt über einen unteren Tragring 13.u aus Metall und über eine IR-durchlässige Glasplatte 20. Auf der Glasplatte 20 ist mittels einer Halte verklebung 21 ein rechteckförmiger Kühlring 22 mit Kühlröhren 23 an seiner unteren Fläche geklebt. Der Kühlring 22 und die Kühlröhren 23 sind über eine Verlötung 24 miteinander verbunden. Die Abmessungen des Kühlringes 22 sind so gewählt, daß er den Randbereich einer auf ihn aufgelegten unteren Flüssigkristallplatte 15.u trägt. Auch die untere Flüssigkristallplatte 15.u verfügt über Einkerbungen 17 in einem später abzubrechenden Randbereich. Die Einkerbungen 17 an der unteren Glasplatte liegen so, daß die am oberen Tragring 13.o befestigten Zentrierstifte 18 in diese Einkerbungen eingreifen, wenn die obere Haltevorrichtung 12.o geführt durch Führungsstangen 25, die am unteren Tragring 13.u befestigt sind, so weit nach unten gefahren wird, daß die obere Flüssigkristallplatte 15.o in dichte Nachbarschaft zur unteren Flüssigkristallplatte 15.u gelangt. Mit Hilfe der Führungsstangen 25, der Einkerbungen 17 und der Zentrierstifte 18 werden die beiden Flüssigkristallplatten 15.o und 15.u so zueinander justiert, daß ihre Elektrodenstrukturen in gewünschter Weise aufeinander ausgerichtet sind.

Unter Bezugnahme auf die soeben anhand der Fig. 1 - 3 beschriebene Vorrichtung und unter Bezugnahme auf Fig. 5 wird nun ein Verfahren zum Herstellen einer Flüssigkristallzelle beschrieben.

Zunächst werden beide Platten 15.o und 15.u dicht aufeinandergelegt und sie werden dann gemeinsam mit Einkerbungen 17 versehen. Anschließend werden auf bekannte Art und Weise Funktionsschichten aufgebracht, und zwar jeweils eine strukturierte Elektrodenschicht und eine Orientierungsschicht, falls gewünscht auch noch eine Isolierschicht zwischen Elektrodenschicht und Orientierungsschicht. Beim Strukturieren der Elektrodenschichten wird darauf geachtet, daß dies mittels eines Justiervorganges unter Bezugnahme auf die Einkerbungen 17 erfolgt. Dadurch wird gewährleistet, daß dann, wenn beim Zusammensetzen der fertigen Platten 15.o und 15.u die Einkerbungen 17 wieder zur Deckung gebracht werden, die Elektrodenstrukturen genau in vorgegebener Art und Weise aufeinander ausgerichtet sind.

Anschließend wird eine der beiden Platten, im Falle des Ausführungsbeispieles die obere Platte 15.o, mit einem Kleberrandstreifen 26 nach einem herkömmlichen Verfahren, z. B. einem Siebdruckverfahren, versehen. Der Kleberrandstreifen 26 wird durchgehend, also ohne Fülloch, aufgebracht. Der Kleber ist ein beliebiger UV-härtender Kleber, wie er für das Herstellen von Flüssigkristallzellen verwendet wird. Die so ausgebildete obere Flüssigkristallplatte 15.o wird dann mittels der Magnethalter 16 am oberen Tragring 13.o befestigt, wobei sie durch Eingreifen der Zentrierstifte 18 in die Einkerbungen 17 in bezug auf die Zentrierstifte 18 ausgerichtet wird.

Auf die untere Flüssigkristallplatte 15.u wird in zwei Portionen Flüssigkristall aus einer Mikroliterpumpe aufgebracht. Für eine Flüssigkristallzelle von jeweils 10 cm Kantenlänge und einer Stärke von 5 μm sind 50 μl Flüssigkristall erforderlich. Der Flüssigkristall enthält Abstandshalter, sogenannte Spacer, mit einem Durchmesser von 5 μm. Die untere Flüssigkristallplatte 15.u ist unter Zimmertemperatur gekühlt, und zwar auf eine solche Temperatur, daß die aufgebrachten Flüssigkristallportionen 27 nicht bis zum Rand der unteren Platte 15.u laufen. Die Platte wird unter Verwendung von Justierhilfen so auf den Kühlring 22 gelegt, daß die Zentrierstifte 18 möglichst genau die Zentrierungen 17 treffen, wenn die obere Haltevorrichtung 12.o auf die untere Haltevorrichtung 12.u abgesenkt wird. Zum besseren Einfädeln der Zentrierstifte 18 in die Einkerbungen 17 weisen die Zentrierstifte 18 Einlaufschrägen auf, die nicht dargestellt sind. Die untere Platte 15.u ist beweglich gelagert, damit sie zentriert werden kann. Sobald die untere Flüssigkristallplatte 15.u auf dem Kühlring 22 aufliegt, wird eine außerhalb des Vakuumgefäßes 11 angeordnete IR-Lampe 28 eingechaltet, deren Strahlenkegel durch eine Blende 29 so eingestellt ist, daß er durch die Glasplatte 20 hindurch fast die gesamte untere Flüssigkristallplatte 15.u trifft, wobei zum gekühlten Randbereich ein kleiner Abstand bleibt. Durch das Erwärmen der unteren Flüssigkristallplatte 15.u verlaufen die Portionen des Flüssigkristalles 27, jedoch nur bis nahe zum gekühlten Randbereich. Dort wird der Flüssigkristall so hochviskos, daß er sich nur noch langsam ausbreitet oder gar erstarrt.

Sobald sich der Flüssigkristall 27 auf der unteren Flüssigkristallplatte 15.u bis nahe an den gekühlten Randbereich verteilt hat, wird die obere Haltevorrichtung 12.o so weit abgesenkt, daß der Kleberrandstreifen 26 der oberen Flüssigkristallplatte 15.o auf dem gekühlten Randbereich der unteren Flüssigkristallplatte 15.u aufsetzt. Die beiden Platten werden dann mit vorgegebenem Druck im Randbereich aufeinandergepreßt. Eine über dem Vakuumgefäß 11 angeordnete UV-Lampe 30 wird eingeschaltet. Ihr Licht durchdringt die Quarzglasplatte 14 und trifft auf den UV-härtbaren Kleber des Kleberrandstreifens 26, wodurch dieser ausgehärtet wird. Sobald das Aushärten so weit fortgeschritten ist, daß die Klebereigenschaften von benetzendem Flüssigkristall nicht mehr negativ beeinflußt werden können, wird statt Kühlmittel Wärmemittel durch die Kühlringe 22 geleitet, um den Aushärtvorgang des Klebers noch durch Wärme zu unterstützen. Es wird dann auch mit dem Belüften des Vakuumgefäßes 11 begonnen. Wenn der Kleber ausreichend ausgehärtet ist, wird die fast fertige Flüssigkristallzelle dem belüfteten Vakuumgefäß 11 entnommen. Es sind dann lediglich noch Randbereiche entlang der Bruchlinie 19 abzubrechen.

Es wird darauf hingewiesen, daß der beschriebene bevorzugte Verfahrensablauf in vielfacher Art und Weise abgeändert werden kann. So kann z. B. der Kleberrandstreifen 26 auf der unteren Flüssigkristallplatte 15.u statt der oberen Flüssigkristallplatte 15.o aufgebracht werden. Der Flüssigkristall 27 muß nicht notwendigerweise außerhalb des Vakuumgefäßes 11 auf die untere Flüssigkristallplatte 15.u aufgetragen werden, sondern dieses Auftragen kann auch im Vakuumgefäß 11 erfolgen. Dies hat den Vorteil, daß auf ein vorsichtiges Handhaben der unteren Flüssigkristallplatte 15.u außerhalb des Vakuumgefäßes 11, die vorzugsweise auch noch zu kühlen ist, verzichtet werden kann. Die untere Flüssigkristallplatte 15.u kann vielmehr problemlos im Vakuumgefäß montiert werden. Dann wird ihr Rand gekühlt und erst wenn dieser ausreichend kalt ist, wird der Flüssigkristall aufgebracht.

Der Flüssigkristall 27 muß nicht notwendigerweise bereits Spacer enthalten wie beim bevorzugten Ausführungsbeispiel, sondern es können auch auf beliebige bekannte Art und Weise Spacer auf die untere Flüssigkristallplatte 15.u aufgebracht werden, bevor Flüssigkristall mit Hilfe einer Mikroliterpumpe oder einer anderen Dosiereinrichung zugeführt wird. Bei dieser Verfahrensschrittfolge ist jedoch darauf zu achten, daß sich der Flüssigkristall durch entsprechende Wahl der Arbeitstemperatur nur sehr langsam auf der unteren Flüssigkristallplatte 15.u ausbreitet. Andernfalls schwemmt er die zuvor aufgebrachten Spacer weg.

Das beschriebene Verfahren kann auch dahingehend abgewandelt werden, daß ein Kleberrandstreifen 26 mit Fülloch verwendet wird und der Flüssigkristall 27 erst nach dem Verbinden der beiden Platten 15.o und 15.u in herkömmlicher Weise eingebracht wird. Das Verfahren hat dann immer noch den Vorteil, daß ein Zellenaufbau mit evakuiertem Zelleninnenraum erheblich schneller hergestellt werden kann als mit dem herkömmlichen Verfahren, gemäß dem das Evakuieren durch das Fülloch erfolgt.

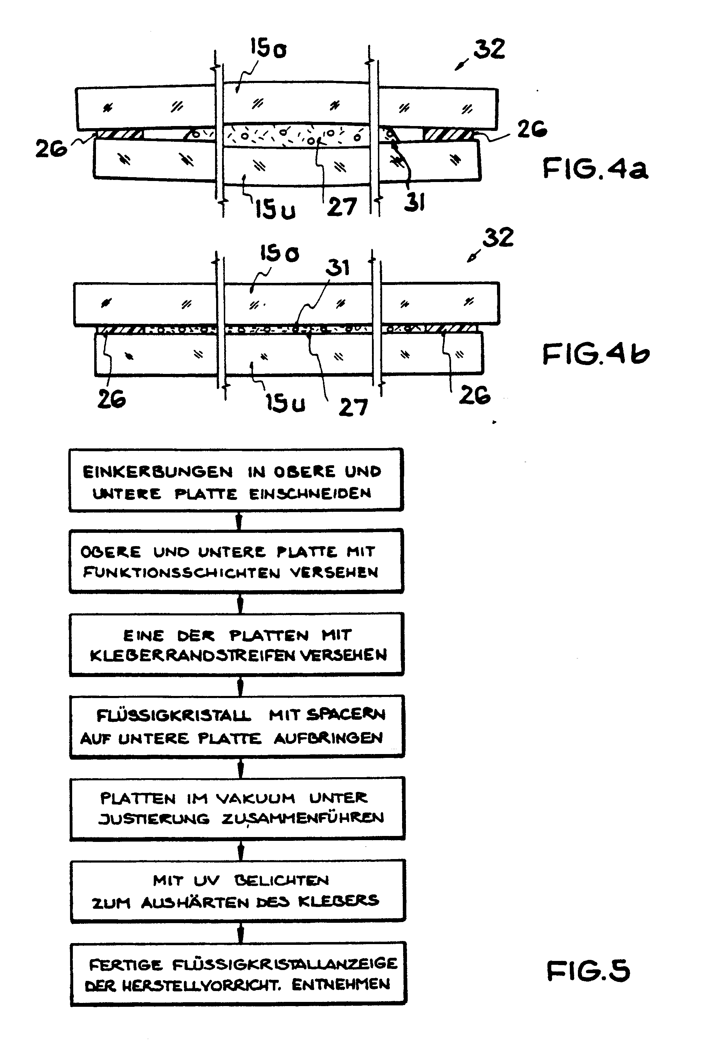

In Fig. 4A ist dargestellt, daß dann, wenn sich der Flüssigkristall 27 wegen gekühltem Randbereich noch nicht über den gesamten Innenraum verteilt hat, ein Auswölben der beiden Flüssigkristallplatten 15.o und 15.u vorliegt. Erst wenn sich der Flüssigkristall 27 über den gesamten Innenraum verteilt hat, wie in Fig. 4B dargestellt, sind die beiden Platten 15.o und 15.u parallel zueinander. Sie nehmen dann genau den durch die Spacer 31, die nur in Fig. 4B dargestellt sind, vorgegebenen Abstand ein. Es wird darauf hingewiesen, daß Spacer auch im Kleber des Kleberrandstreifens 26 vorteilhafterweise vorhanden sind. Dies, damit dort der richtige Abstand auch dann eingestellt wird, wenn der Flüssigkristall 27 den Randbereich noch nicht erreicht hat. Werden keine Spacer im Kleber verwendet, der richtige Plattenabstand im Randbereich mit Hilfe von außen eingeschobenen Lehren

An dieser Stelle sei auch darauf hingewiesen, daß in allen Figuren die Teile der Flüssigkristallzelle 32 nicht maßstabsgetreu eingezeichnet sind. So sind die Stärken der Platten und der Flüssigkristallschicht im wesentlichen gleich dargestellt, obwohl die Platten eine Stärke im Bereich von bis zu einigen Millimetern aufweisen und die Flüssigkristallschicht nur einige wenige μm bis etwa 20 μm stark ist, je nach Art der Flüssigkristallzelle. Die Breite des Kleberrandstreifens 26 beträgt in aufgebrachtem Zustand einige wenige Millimeter. Beim Zusammensetzen der Platten 15.o und 15.u wird der Kleberrandstreifen 26 breiter gedrückt.

Es hat sich in Versuchen herausgestellt, daß besonders gute Klebeeigenschaften dann erzielt werden, wenn der aufgebrachte Flüssigkristall 27 den Kleberrandstreifen 27 überhaupt nicht benetzt. Ein geringes Benetzen kann jedoch insbesondere für Flüssigkristallzellen hingenommen werden, die nur solchen mechanischen Beanspruchungen ausgesetzt werden, bei denen die Zelle trotz der etwas verminderten Klebeeigenschaft nicht zerstört wird.

Die aufgebrachte Menge Flüssigkristall 27 wird idealerweise so gewählt, daß sie genau zum Bilden der Flüssigkristallschicht vorgegebener Länge, Breite und Höhe ausreicht. Abweichungen von einigen wenigen Prozent können jedoch ohne weiteres hingenommen werden. Ist geringfügig zuviel Flüssigkristall vorhanden, wird die Dicke der Flüssigkristallschicht einige wenige Prozent höher, als es der durch die Spacer 31 vorgegebenen Dicke entspricht. Dies stört die Funktion der Zelle nicht. Wird etwas zuwenig Flüssigkristall eingegeben, bleiben benachbart zum Kleberrandstreifen 26 Volumina, die nicht mit Flüssigkristall 27 ausgefüllt werden. Derartige Blasen sind zwar gut erkennbar, jedoch stören sie im Randbereich nicht, da dieser ohnehin beim Herstellen eines Displays mit Hilfe der Flüssigkristallzelle ausgeblendet wird.

Beim Ausführungsbeispiel wurde so vorgegangen, daß nur der Rand der unteren Platte gekühlt wurde, und der Flüssigkristall in mehreren Portionen aufgebracht wurde. Diese Maßnahmen dienen dazu, den Flüssigkristall vor dem Verkleben der beiden Platten bereits möglichst gleichmäßig über die Fläche der unteren Platte, mit Ausnahme von deren Kleberrand, zu verteilen. Dies ist bei unregelmäßig geformten Platten oder bei rechteckigen Platten mit großem Seitenverhältnis von Vorteil, da bei solchen Platten die Gefahr besteht, daß sich beim Aufdrücken der oberen Platte der breitgedrückte Flüssigkristall bis zum den nächstliegenden Rand ausbreitet und über diesen überfließt, bevor der Verklebevorgang einsetzt. Ist ein solches lokales Überlaufen nicht zu befürchten, kann die gesmte Menge Flüssigkristall mit einem Tropfen aufgebracht werden.

Sehr vorteilhaft ist es auch, nur die jenige Stelle der unteren Platte zu kühlen, auf die der Flüssigkristall aufgebracht wird, und zwar so stark, daß dieser beim Aufsetzen der oberen Platte nicht wesentlich zerläuft. Bei hochviskosen Kristallen, z.B. smektischen Kristallen, kann auf eine Kühlung auch ganz verzichtet werden.

## Ansprüche

1. Verfahren zum Herstellen einer Flüssigkristallzelle aus einer oberen und einer unteren Platte, die mit Funktionsschichten versehen und über einen Kleberrandstreifen miteinander verbunden werden und eine Flüssigkristallschicht einschließen, **dadurch gekennzeichnet, daß**
- eine der beiden Platten mit dem Kleberrandstreifen versehen wird,
- die beiden Platten im Vakuum unter Justierung zusammengeführt und über den Kleberrandstreifen miteinander verbunden werden und
- der Kleber ausgehärtet wird.

2. Verfahren nach Anspruch 1, **dadurch gekennzeichnet, daß** diejenige Menge Flüssigkristall, die zum Bilden der Flüssigkristallschicht im wesentlichen erforderlich ist, vor dem Zusammenführen der beiden Platten auf die untere Platte aufgebracht wird.

3. Verfahren nach Anspruch 2, **dadurch gekennzeichnet,** daß der aufgebrachte Flüssigkristall Spacer enthält.

4. Verfahren nach Anspruch 2, **dadurch gekennzeichnet,** daß der Flüssigkristall an Luft auf eine gekühlte Platte aufgebracht wird.

5. Verfahren nach Anspruch 2, **dadurch gekennzeichnet,** daß die untere Platte im Vakuum vor dem Zusammenführen mit der oberen Platte in einem Randbereich gekühlt wird, ihre andere Fläche jedoch soweit erwärmt wird, daß der aufgebrachte Flüssigkristall sich über die erwärmte Fläche ausbreitet.

6. Verfahren nach Anspruch 1, **dadurch gekennzeichnet,** daß ein UV-härtbarer Kleber verwendet wird.

7. Vorrichtung zum Herstellen einer Flüssigkristallzelle aus einer oberen und einer unteren Platte, die mit Funktionsschichten versehen und über einen Kleberrandstreifen miteinander verbunden werden und eine Flüssigkristallschicht einschließen, **gekennzeichnet durch** eine Vakuumeinrichtung (11) mit Zusammenführeinrichtung (12.u, 25, 12.o) für die obere Platte (15.o) und die untere Platte (15.u).

8. Vorrichtung nach Anspruch 7, **dadurch gekennzeichnet,** daß die Zusammenführeinrichtung eine mechanisch wirkende Justiereinrichtung (18) aufweist.

9. Vorrichtung nach Anspruch 7, **gekennzeichnet durch** eine UV-Belichtungseinrichtung (30) zum UV-Belichten des Kleberrandstreifens (26) innerhalb der Vakuumeinrichtung (11).

10. Vorrichtung nach Anspruch 7, **gekennzeichnet durch** eine Kühleinrichtung (22, 23) innerhalb der Vakuumeinrichtung (11) zum Kühlen der unteren Platte (15.u).

FIG.1

FIG.2

FIG.3

FIG.4a

FIG.4b

EINKERBUNGEN IN OBERE UND
UNTERE PLATTE EINSCHNEIDEN

OBERE UND UNTERE PLATTE MIT
FUNKTIONSSCHICHTEN VERSEHEN

EINE DER PLATTEN MIT
KLEBERRANDSTREIFEN VERSEHEN

FLÜSSIGKRISTALL MIT SPACERN
AUF UNTERE PLATTE AUFBRINGEN

PLATTEN IM VAKUUM UNTER
JUSTIERUNG ZUSAMMENFÜHREN

MIT UV BELICHTEN
ZUM AUSHÄRTEN DES KLEBERS

FERTIGE FLÜSSIGKRISTALLANZEIGE
DER HERSTELLVORRICHT. ENTNEHMEN

FIG.5